Europäisches Patentamt

European Patent Office

Office européen des brevets

(19)

(11) Veröffentlichungsnummer: **0 208 047**
B1

(12)

# EUROPÄISCHE PATENTSCHRIFT

(45) Veröffentlichungstag der Patentschrift:
24.08.88

(21) Anmeldenummer: **86101666.5**

(22) Anmeldetag: **30.10.81**

(60) Veröffentlichungsnummer der früheren Anmeldung
nach Art. 76 EPÜ: **0051575**

(51) Int. Cl.⁴: **B 62 D  27/06,** B 62 D  33/00

(54) **Vorrichtung an Rungen für Ladeplattformen.**

(30) Priorität: **03.11.80  DE 8029162 U**

(43) Veröffentlichungstag der Anmeldung:
**14.01.87 Patentblatt 87/3**

(45) Bekanntmachung des Hinweises auf die Patenterteilung:
**24.08.88 Patentblatt 88/34**

(84) Benannte Vertragsstaaten:
**AT BE CH DE FR GB IT LI NL SE**

(56) Entgegenhaltungen:
**FR - A - 1 539 689
GB - A - 1 567 755**

(73) Patentinhaber: **Rosén, Göran, Rädagatan 5,
S-531 51 Lidköping (SE)**

(72) Erfinder: **Rosén, Göran, Rädagatan 5,
S-531 51 Lidköping (SE)**

(74) Vertreter: **Roth, Ernst Adolf Michael et al, GÖTEBORGS
PATENTBYRA AB Box 5005, S-402 21 Göteborg (SE)**

EP 0 208 047 B1

ACTORUM AG

# Beschreibung

Die vorliegende Neuerung betrifft eine Vorrichtung an Rungen für Ladeplattformen von Fahrzeugen, mit mindestens einer Verschlussvorrichtung zur Arretierung einer Seitenplanke gegenüber der Runge, in der mindestens ein mittels eines Bedienungshebels verschiebbarer Arretierbolzen gelagert ist, der mit einem Arretierbügel in die Seitenplanke in Eingriff bringbar ist, wobei die Runge an ihrem oberen freien Ende mit einer abnehmbaren Stütze für eine Abdeckplane od. dgl. versehen ist und wobei die Stütze gegenüber der Runge in gegenseitig ausgerichteter Stellung festlegbar ist.

Insbesondere für Lastkraftwagen, Anhänger u.dgl. werden die Rungen, die zur Abstützung der Seitenplanken dienen, desöfteren für die Aufnahme je einer Stütze für eine Abdeckplane ausgenützt. In der DE-C-1956809 wird eine solche kombinierte Runge und Planenstütze beschrieben, welche eine von dem gemeinsamen Abstützpunkt (offene Angel) ausgehende Verlängerung aufweist, die in ausgerichteter Stellung der beiden Teile das obere Ende der Runge überlappt und als Anschlag für die Seitenplanke ausgebildet ist, bzw. durch eine Verschraubungsvorrichtung an der Runge mit dieser verbindbar ist. Eine solche Ausbildung erfordert jedoch ein Zusammenwirken der Stütze mit den Seitenplanken, die ein Durchknicken der Rungen-Stütze verhindert. Eine solche Abhängigkeit ist jedoch aus verschiedenen Gründen nicht immer erwünscht. Eine Verschraubung dagegen, die die Stütze mit der Runge fest verbindet, fordert manuellen Arbeitsaufwand, oft in einer unbequemen Arbeitshöhe, und öffnet sich leicht durch Erschütterungen des Fahrzeuges.

Zweck der Erfindung ist eine Vorrichtung an Rungen mit Planenstützen zu schaffen, mit welcher es möglich ist, mit Hilfe vorhandener Betätigungshebel zum Öffnen der Verschlussvorrichtungen für die Seitenplanken ebenfalls die Planenstütze gegenüber der Runge zu sperren.

Diese Aufgabe wird dadurch gelöst, dass an dem Arretierbolzen ein Riegel angeordnet ist, der in Sperrstellung des Arretierbolzens mit einem Sperrbügel an der Stütze in Eingriff bringbar ist.

Im folgenden wird ein Ausführungsbeispiel der Neuerung an Hand der Zeichnungen näher beschrieben. Es zeigen

Fig. 1 eine Vorderansicht eines Teiles einer Runge, gemäss der Erfindung,

Fig. 2 eine Aufsicht auf die Runge nach Fig. 1 nach entfernter Rückplatte,

Fig. 3 einen Längsschnitt durch die Runge längs der Linie III-III der Fig. 2,

Fig. 4 eine Aufsicht auf eine modifizierte Runge nach entfernter Rückplatte,

Fig. 5 einen Längsschnitt durch eine modifizierte Runge längs der Linie V-V der Fig. 4.

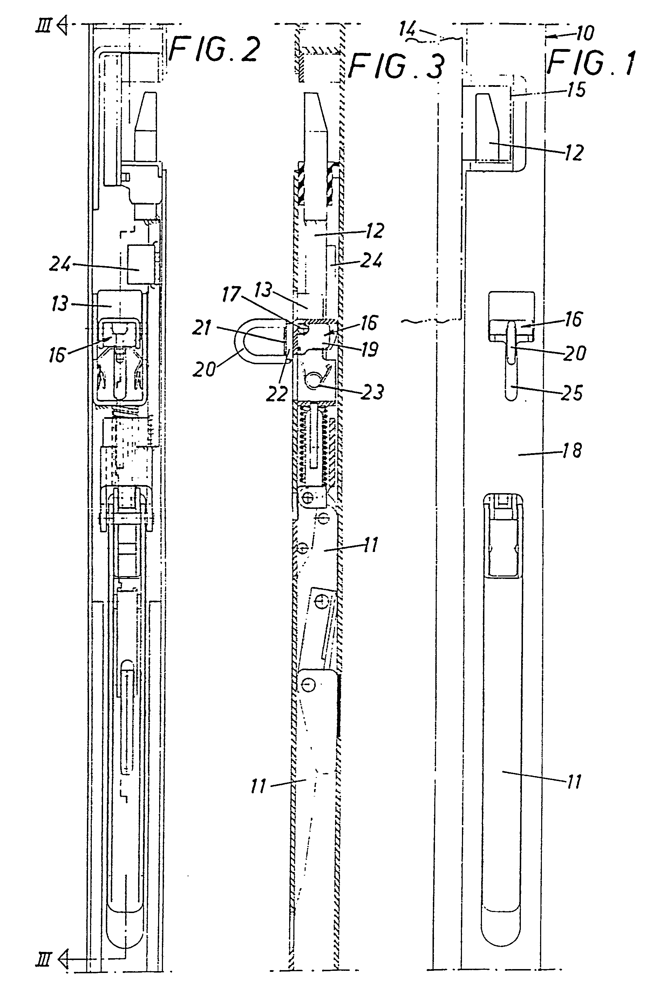

Die konstruktive Bauart der Runge 10 ist beispielsweise durch die deutsche Patentschrift DE-C-1.780.395 bzw. die deutsche Offenlegungsschrift DE-A-24.44.021 bekannt. Danach besteht sie aus einer nicht näher dargestellten Befestigungsvorrichtung, mit welcher sie an der Seitenkante der Ladeplattform durch Betätigen eines Bedienungshebels 11 befestigbar ist. Mit dem gleichen Bedienungshebel 11 ist ein Arretierbolzen 12 in der Runge axial verschiebbar, dessen freies Ende in einen an der Seitenplanke 14 des Fahrzeugs angebrachten Arretierbügel 15 eingeführt werden kann. Das Ausführungsbeispiel gemäss der Fig. 1-3 zeigt eine Runge mit einem Arretierbolzen 12 für den Anschluss einer Seitenplanke 14. Sollen zwei Seitenplanken an eine gemeinsame Runge angeschlossen werden, weist die Runge zwei solche Arretierbolzen auf, wie dies in dem Ausführungsbeispiel gemäss Fig. 4 und 5 dargestellt ist.

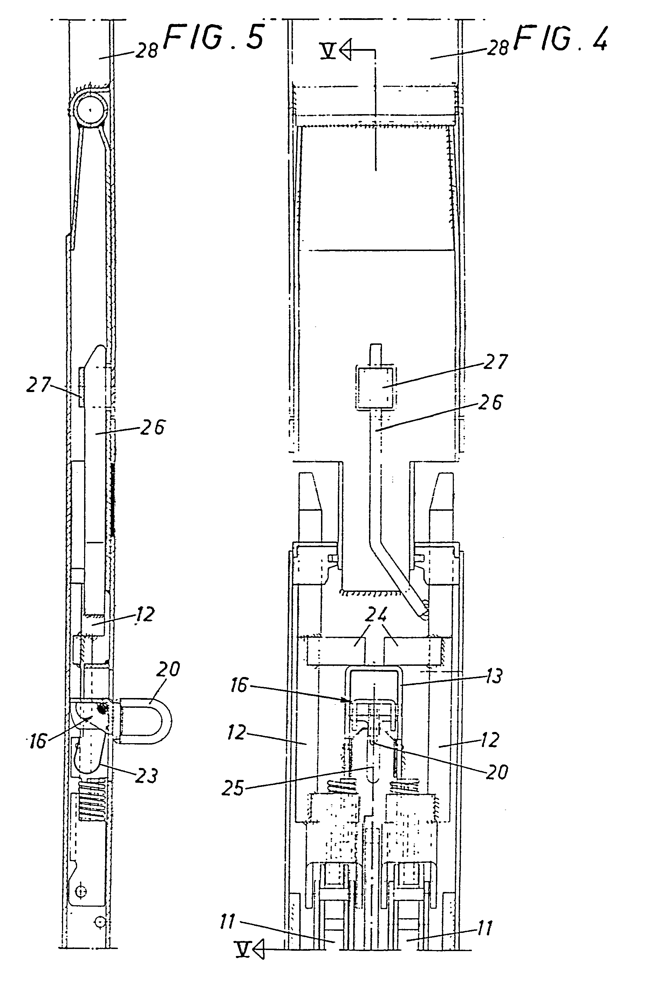

Im Inneren der Runge 10 ist eine Halterung 13 für ein ösenförmiges Organ 16 angebracht, das als zweiarmiger Hebel ausgebildet und mit einem Drehzapfen 17 versehen ist, der durch die Halterung 13 an der Frontplatte 18 der Runge befestigt ist. Das als zweiarmiger Hebel ausgebildete ösenförmige Organ 16 besteht aus einem ersten Arm 19, in welchem der Drehzapfen 17 befestigt ist, sowie einem zweiten Arm 20, welcher als Öse ausgebildet ist. Die Öse ist um eine Drehachse 21 in einem Lager 22 drehbar gelagert, wobei die Drehachse 21 rechtwinklig zur Achse des Drehzapfens 17 ausgerichtet ist. Die Achse des Drehzapfens 17 ist gleichzeitig die Schwenkachse des zweiarmigen Hebels, dessen erster Arm 19 exzentrisch durch eine Feder 23 so belastet ist, dass das ösenförmige Organ 16 wie ein bistabiles Sperrgetriebe in jeder der beiden Endstellungen stabil gehalten ist. Die Fig. 1 und 2 veranschaulichen das ösenförmige Organ 16 in einer aus der Runge teilweise ausgeschwenkten Stellung, in welcher sich die Öse 20 ausserhalb der Runge befindet, während der erste Arm 19 in den Bewegungsbereich des Arretierbolzens 12 innerhalb der Runge geschwenkt ist. In dieser Stellung wird der Arretierbolzen 12 daran gehindert, sich bei Betätigung des Bedienungshebels 11 mehr als ein kurzes Stück entsprechend dem Schwenkradius des ösenförmigen Organs 16 zu bewegen. Ein vom Arretierbolzen 12 abstehender Absatz 24 stösst bei Betätigung des Bedienungshebels 11 gegen den zweiten Arm 19, wodurch der Arretierbolzen 12 nicht aus dem Arretierbügel 15 in der Seitenplanke 14 herausgezogen und so die Seitenplanke nicht freigegeben werden kann.

Eine Ladeplattform eines LKW's hat gewöhnlich zwischen 6-12 Rungen und ebensoviele Ösen, durch die ein Drahtseil gezogen und endseitig plombiert wird, wodurch weder die Seitenplanken der Ladeplattform herabgeklappt noch die Rungen von dieser entfernt werden können. Nach Entfernung des Plombierungsdrahtseils kann das ösenförmige Organ 16 um den Drehzapfen 17 geschwenkt werden, und zwar etwa um 90°, wodurch die Öse 20 durch eine Ausnehmung 25 in der Frontplatte der Runge in dieser eingeschwenkt wird, dabei wird der 1. Arm 19 aus dem Bewegungsbereich des Arretierbolzens 12 geschwenkt und der Absatz 24 kann sich frei an dem ösenförmigen Organ 16 vorbeibewegen.

Durch die exzentrische und seitlich versetzte Anordnung des Angriffspunktes der Feder 23 in Bezug auf den Drehzapfen 17 ergibt sich ein bistabiles Sperrgetriebe. Beim Schwenken des ösenförmigen Organs wird die Feder 23, deren erstes Ende sich gegen die Rungenwand abstützt und deren zweites Ende mit dem ösenförmigen Organ 16 in Eingriff ist, um das erste Ende geschwenkt, bis zum Erreichen des Todpunktes gespannt und bei weiterem Schwenken wieder entspannt, wodurch das ösenförmige Organ in seinen beiden Endstellungen durch Federdruck stabil gehalten wird, während in Zwischenstellungen die Feder bestrebt ist, das Organ in eine dieser Endstellungen, entsprechend der Lage der Zwischenstellung zum Todpunkt zu bringen.

Sind die Rungen der Ladeplattform mit abnehmbaren vertikalen Stützen für eine Abdeckplane oder dergleichen versehen, so wie dies beispielsweise in der deutschen Patentschrift DE-C-1.956.809 beschrieben ist, ist es mit Rücksicht auf die Forderungen der TIR-Konvention wichtig, dass die Abdeckplane nicht abgenommen werden kann, ohne die Plombierung zu beschädigen. Um dies sicherzustellen ist der Arretierbolzen 12, wie in Fig. 4 und 5 dargestellt, mit einem Riegel 26 versehen, der in einen Sperrbügel 27 in der abnehmbaren vertikalen Stütze 28 einführbar ist.

In Sperrstellung des Arretierbolzens 12 wird bei dieser Ausführung somit sowohl die Seitenplanke wie auch die Stütze für die Abdeckplane verriegelt.

## Patentanspruch

Vorrichtung an Rungen für Ladeplattformen von Fahrzeugen, mit mindestens einer Verschlussvorrichtung zur Arretierung einer Seitenplanke (14) gegenüber der Runge (10), in der mindestens ein mittels eines Bedienungshebels (11) verschiebbarer Arretierbolzen (12) gelagert ist, der mit einem Arretierbügel (15) in der Seitenplanke (14) in Eingriff bringbar ist, wobei die Runge an ihrem oberen freien Ende mit einer abnehmbaren Stütze (28) für eine Abdeckplane od. dgl. versehen ist, und wobei die Stütze gegenüber der Runge in gegenseitig ausgerichteter Stellung festlegbar ist, dadurch gekennzeichnet, dass an dem Arretierbolzen (12) ein Riegel (26) angeordnet ist, der in Sperrstellung des Arretierbolzens mit einem Sperrbügel (27) an der Stütze (28) in Eingriff bringbar ist.

## Claim

A device at stanchions for vehicle loads platforms, having at least one locking device for arresting a side panel (14) to the stanchion (10), in which is supported at least one locking bolt (12), which is displaceable with means of an actuating lever (11), and which is moveable to engagement with a locking clamp (15) in the side panel (14), whereby the stanchion at its upper end is provided with a detachable strut (28) for a covering plane or the like, and whereby the strut is arrestable to the stanchion in mutually aligned positions, characterized therein, that a latch (26) is provided on the locking bolt (12), which latch in the arresting position of the locking bolt can be brought to engagement with a locking clamp (27) on the strut (28).

## Revendication

Dispositif prévu sur des ranchers de plates-formes de chargement de véhicules, comportant au moins un dispositif de fermeture servant à bloquer une planche latérale (14) par rapport au rancher (10), dans lequel est montée au moins une broche de blocage (12) qui peut être déplacée à l'aide d'un levier de manœuvre (11) et peut être engagée dans un étrier de blocage (15) monté dans la planche latérale (14), et dans lequel le rancher comporte, au niveau de son extrémité supérieure libre, un support amovible (28) prévu pour une bâche de revêtement ou analogue, et dans lequel le support peut être fixé par rapport au rancher dans une position antagoniste alignée par rapport à ce dernier, caractérisé en ce que sur la broche de blocage (12) se trouve monté un verrou (26) qui peut être engagé dans un étrier de blocage (27) prévu sur le support (28), lorsque la broche de blocage est dans sa position de blocage.

FIG.2  FIG.3  FIG.1

0 208 047

FIG. 5

FIG. 4

7